# EUROPÄISCHE PATENTSCHRIFT

(11) **EP 1 470 024 B1**
(45) Veröffentlichungstag und Bekanntmachung des Hinweises auf die Patenterteilung: **22.06.2005**
(21) Anmeldenummer: 03702470.0
(22) Anmeldetag: 20.01.2003
(51) Int. Cl.: B60R 1/00

(54) **AUTOMOBILES INFRAROT-NACHTSICHTGERÄT**
AUTOMOBILE INFRARED-NIGHT VIEWING DEVICE
DISPOSITIF AUTOMOBILE DE VISION NOCTURNE A INFRAROUGE

(30) Priorität: 28.01.2002 DE 10203413
(43) Veröffentlichungstag der Anmeldung: 27.10.2004
(73) Patentinhaber: DaimlerChrysler AG, 70567 Stuttgart (DE)
(72) Erfinder: EGGERS, Helmuth, 89077 Ulm (DE); KURZ, Gerhard, 73240 Wendlingen (DE); SEEKIRCHER, Jürgen, 73760 Ostfildern (DE); WOHLGEMUTH, Thomas, 72631 Aichtal (DE)
(86) Internationale Anmeldenummer: PCT/EP2003/000483
(87) Internationale Veröffentlichungsnummer: WO 2003/064213

(56) Entgegenhaltungen:
- EP-A- 1 024 057
- EP-A- 1 079 611
- WO-A-02/36389
- DE-A- 4 007 646
- DE-A- 19 736 774
- US-A- 5 949 331

## Beschreibung

Die Erfindung betrifft ein automobiles Infrarot-Nachtsichtgerät und ein Fahrzeug mit einem solchen.

Aus der gattungsbildenden DE 197 36 774 A1 ist ein Verfahren zur Informationsanzeige in einem Kraftfahrzeug bekannt, bei dem von einem durch eine Tageslichtkamera in einem Fahrzeug aufgenommenen Bild lediglich ein besonders relevanter Ausschnitt auf einer Anzeigeeinheit angezeigt wird. Die entsprechenden Bilddaten werden dabei ausgehend von einem Selektionskriterium aus dem Gesamtbild ausgewählt. Hierbei dienen als Selektionskriterium die Umrisse von Verkehrszeichen innerhalb der Tageslichtaufnahme. Als Ergebnis erhält der Fahrzeugführer eine einfache und eingängige Repräsentation eines Verkehrszeichens, insbesondere als Erinnerungsfunktion dargestellt.

Automobile Nachtsichtgeräte sind aus der DE 39 32 216 C2 und aus der DE 40 07 646 A1 bekannt.

Diese zeigen eine Kamera, welche eine Empfindlichkeit im nicht sichtbaren Frequenzbereich des Lichts beispielsweise mit einer Wellenlänge zwischen 800 nm und 2000 nm hat. Darüber hinaus zeigen diese Lichtquellen, die polarisiertes bzw. nicht polarisiertes Infrarotlicht aussenden, zur Beleuchtung der Umgebung. Das von der Umgebung reflektierte infrarote Licht wird durch die Infrarotkamera aufgenommen und auf einem im Sichtbereich des Fahrzeuglenkers angeordneten Anzeigegerät, das beispielsweise als Head-up-Display ausgebildet ist, abgebildet. Dabei werden die durch die Kamera aufgenommenen Bilddaten dem Anzeigegerät/Display wiedergegeben. Die bekannten automobilen Nachtsichtgeräte sind für den Benutzer schwierig handhabbar und erweisen sich als nicht sehr nützlich.

Es ist des Weiteren ein Nachtsichtsichtsystem bekannt, welches über eine der IR-Kamera und dem Display zwischengeschaltete Bildverarbeitungseinheit verfügt. Wobei die Bilddaten der IR-Kamera vor deren Darstellung einer einfachen Verarbeitung unterzogen werden, um im Wesentlichen das Signal von Rauschanteilen zu befreien.

In der ebenfalls gattungsbildenden europäischen Offenlegungsschrift EP 1 024 057 A2 wird eine Anzeigevorrichtung für ein Nachtsichtsystem eines Kraftfahrzeuges beschrieben, bei welchem die Bildanzeige als ganzes selektiv an- und abgeschaltet wird. Die Steuerung dieses Anund Abschaltens erfolgt hierbei auf Grundlage einer Abschätzung dahingehend, ob eine den Fahrzeugführer unterstützende Anzeige des Kamerabildes notwendig ist oder nicht. Wird die Notwendigkeit als nicht gegeben angenommen, unterbeleibt eine Kamerabildanzeige beziehungsweise wird eine derartige Anzeige abgeschaltet.

Der Erfindung liegt die Aufgabe zugrunde, eine automobiles Infrarot-Nachtsichtgerät anzugeben, das für einen Fahrer oder Fahrzeuginsassen besser bzw. einfacher nutzbar und nützlicher ist bzw. ein Fahrzeug anzugeben, das mit einem solchen automobilen Infrarot-Nachtsichtgerät ausgestattet ist.

Die Aufgabe wird erfindungsgemäß gelöst, zum einen durch eine automobiles Infraort-Nachtsichtsystem mit den Merkmalen des Patentanspruchs 1 oder im gleichen Sinne mit den Merkmalen des Patentanspruchs 2 (Für die Vertragsstaaten DE, FR, GB: nur Patentanspruch 1, für die anderen Vertragsstaaten: Patentansprüche 1 und 2, sowie durch ein Fahrzeug mit den Merkmalen des Anspruchs 11 (für alle Vertragsstaaten).

Vorteilhafte Weitergestaltungen der Erfindung sind Gegenstand von Unteransprüchen.

Die Erfindung geht davon aus, dass die durch die Infrarot-Kamera aufgenommenen Bilddaten, die die Umgebung eines Automobils repräsentieren, einer Bildverarbeitungseinheit, welche mit der Infrarot-Kamera verbunden ist, zugeführt werden. Diese Bildverarbeitungseinheit ist so ausgebildet, dass sie mittels einer Steuereinheit so gesteuert werden kann, dass ein zusammenhängender Bereich der zugeführten Bilddaten selektiert werden und diese selektierten Daten dann formatfüllend auf dem mit der Bildverarbeitungseinheit verbundenen Display wiedergegeben werden.

Dabei ist das Display im Sichtbereich des Fahrer so angeordnet, dass er ohne oder nahezu ohne störende Ablenkung von dem direkten Anblick der Umgebung die im Display dargestellten, selektierten IR-Bilddaten aufnehmen kann. Die von der Infrarot-Kamera empfangenen Bilddaten, welche mit Hilfe der Bildverarbeitungseinheit und des Displays sichtbar gemacht werden, repräsentieren Informationen zur Wärmeverteilung der Umgebung, die außerhalb des sichtbaren Bereiches des Lichtspektrums liegen. Zusätzlich zu diesen Bilddaten können weitere Bilddaten aus dem sichtbaren Frequenzbereich des Lichtes ergänzend hinzutreten und von der Infrarot-Kamera aufgenommen, anschließend verarbeitet und wiedergegeben werden.

Das der Erfindung der Anmelderin zugrundeliegende automobile IR-Nachtsichtsystem dient weniger einer Informationsanzeige im Sinne einer Verkehrszeichenanzeige entsprechend DE 197 36 774 Al, um auf aktuell gültige Verkehrsregelungen hinzuweisen oder an diese zu erinnern, sondern dient primär der Verbesserung der Sicht eines Kraftfahrzeugführers, insbesondere bei Nacht oder die Sicht beeinträchtigenden Witterungsbedingungen. Die Anzeige eines derartigen die Sicht verbessernden System, hat entsprechend die Aufgabe dem Fahrer leicht eingängig die augenblickliche schwer einsehbare Verkehrssituation darzubieten. Um die diese der Erfindung zugrunde liegende Aufgabe zu realisieren, ist es notwendig, andere als die aus der Verkehrszeichenerkennung im Tageslichtbereich bekannten Selektionskriterien Bilddaten zu definieren. Im Rahmen der Erfindung werden deshalb zwei neuartige und erfinderische Selektionskriterien zur Auswahl von zusammenhängenden Bereichen innerhalb von IR-Bildern beschrieben. Das eine Selektionskriterium wird aus den Sensordaten eines Fahrgeschwindigkeitssensors hergeleitet, während alternativ ein anderes Selektionskriterium aus den Sensordaten eines Umgebungserfassungssensors hergeleitet wird.

Durch den Selektionsprozess, das heißt durch die Auswahl eines Ausschnittes - also eines zusammenhängenden Bereiches der der Bildverarbeitungseinheit zugeführten Bilddaten - wird zum einen eine Auswahl getroffen und zum anderen auch ein Vergrößerungsfaktor festgelegt, der durch Größe/Format des Ausschnittes bzw. Größe/Format des Displays festgelegt ist. Hierbei kann eine Anpassung der wiederzugebenden Bilddaten an das Format des Displays erfolgen, in dem bestimmte Abschnitte der selektierten Bilddaten, welche nicht mit dem Display-Format korrelieren, nicht zur Darstellung gebracht werden.

Durch die Selektion der empfangenen Bilddaten gelingt es, einen Ausschnitt der empfangenen Bilddaten, die für den Benutzer besonders interessanten Bilddaten und damit die besonders relevanten Informationen enthält, dem Benutzer des Nachtsichtgerätes also dem Fahrer oder dem Beifahrer des Fahrzeugs sehr einfach und gut zugänglich zu machen.

Dabei ist dieses automobile Infrarot-Nachtsichtgerät mit einer Bildverarbeitungseinheit ausgestattet, die eine Bildverarbeitung in Echtzeit ermöglicht, so dass ohne relevanten Zeitverlust eine Wiedergabe der aufgenommenen und selektierten IR-Bilddaten bzw. eine Anpassung der Selektion mit der anschließenden Wiedergabe ohne relevanten Zeitverlust ermöglicht. Hierdurch ist die für den automobilen Einsatz notwendige unmittelbare Darstellung der aktuellen Situation gewährleistet. Hierdurch ist die Akzeptanz eines solchen mobilen Infrarot-Nachtsichtgerätes für den Benutzer in besonderem Maße gegeben, da er jeweils die aktuelle Information zur Umgebung einerseits unmittelbar durch die Augen im sichtbaren Lichtspektrum ohne Zwischenschaltung des Infrarot-Nachtsichtgerätes und andererseits unter Zwischenschaltung des Infrarot-Nachtsichtgerätes wahrnehmen kann. Dies ermöglicht ihm bei nicht ausreichende Sicht auf die Umgebung, beispielsweise bei Nacht, bei Dämmerung oder bei Nebel oder ähnlichen Verhältnissen durch die aktuellen dieselbe Umgebungssituation mit einem relevanten vergrößerten Ausschnitt der Infrarot-Bilddaten auf einfache und angenehme Weise zu ergänzen und daraus eine optimierte Information über die Umgebung zu erhalten, was die Verkehrssicherheit erhöht.

Nach einer bevorzugten Ausführungsform der Erfindung ist ein Sensor zur Erfassung der Fahrzeuggeschwindigkeit vorgesehen, der mit der Steuereinheit verbunden ist. Anhand der erfassten Fahrzeuggeschwindigkeit, die beispielsweise unter Mitwirkung des Tachometers gebildet wird, wird geschwindigkeitsabhängig das Selektionsmaß der Bilddaten gesteuert. Das heißt, dass bevorzugt bei einer hohen Geschwindigkeit ein kleiner Ausschnitt selektiert wird, der stark vergrößert auf dem Display wiedergegeben wird. Damit ist sichergestellt, dass der für eine größere Geschwindigkeit relevante weiter entfernte Bereich vor dem Auto in dem Display des Infrarot-Nachtsichtgerätes wiedergegeben wird und nicht die bei hohen Geschwindigkeiten nicht relevanten Bereiche unmittelbar vor dem Fahrzeug. Umgekehrt wird bei niedrigen Geschwindigkeiten die Selektion der Bilddaten so gewählt, dass von den der Bildverarbeitung zugeführten Bilddaten ein großer Ausschnitt oder gegebenenfalls alle Bilddaten zur Wiedergabe auf dem Display gebracht werden. Hierdurch ist sichergestellt, dass in der Art eines Weitwinkelobjektivs bei einer geringeren Geschwindigkeit der gesamte Nahbereich vor dem Fahrzeug erfaßt und durch das Infrarot-Nachtsichtgerät mit den entsprechenden Wärmeinformationen wiedergegeben wird. Hierdurch ist ein situationsabhängiges, geschwindigkeitsabhängiges Selektieren der wiederzugebenden Bilddaten gegeben. Hierdurch ist ein sehr sicheres und angenehmes intuitives Nutzen der Information des Nachtsichtgerätes ermöglicht.

Es hat sich als besonders vorteilhaft erwiesen, daß automobile Nachtsichtgeräte mit einem Sensor zur Erfassung der Fahrzeugumgebung zu versehen, welcher mit der Steuereinheit derart verbunden ist, dass die Bildverarbeitungseinheit in Abhängigkeit von den erfaßten Daten der Fahrzeugumgebung die Selektion der Bilddaten steuert. Hierdurch ist ein Selektieren der wiederzugebenden Daten aus den aufgenommen Daten abhängig von der erfaßten Umgebungssituation gegeben, was zu einer verbesserten Aufnahmefähigkeit der dem Fahrer zur Verfügung gestellten Information führt.

Beispielsweise ist der Sensor zur Erfassung des Straßenverlaufes geeignet, so dass der Sensor beispielsweise das Vorliegen einer Links- oder Rechtskurve, einer Geraden usw. erkennt und dementsprechend die Selektion der Bilddaten und damit der wiederzugebenden Bilddaten so wählt, dass entsprechend dem Fahrverlauf bei einer Rechtskurve vorwiegend der rechte Teil der zugeführten Bilddaten, bei einer Linkskurve der linke Teil der zugeführten Bilddaten und bei einer Geraden der mittlere Teil der Bilddaten ausgewählt und zur Wiedergabe gebracht werden. Vorzugsweise wird zusätzlich zu der straßenverlaufsabhängigen Auswahl der Bilddaten zusätzlich die Größe des ausgewählten Ausschnittes geschwindigkeitsabhängig gewählt. Dies führt zu einer optimierten straßenverlaufsabhängigen und einer geschwindigkeitsabhängigen Wiedergabe der Infrarot-Bilddaten, die jeweils die relevanten Informationen der Umgebung sicher und für den Benutzer gut aufnehmbar wiedergeben.

Daneben hat es sich besonders bewährt, mittels Sensoren den Wetterzustand der Umgebung zu erfassen und abhängig davon die Selektion der Bilddaten zu steuern. Bei gutem, trockenem oder sonnigem Wetter hat es sich bewährt, den Ausschnitt klein zu wählen, während der Ausschnitt der wiederzugebenden Daten aus den aufgenommenen Daten bei feuchtem Wetter oder Regen weniger klein und bei Glätte oder Schneefall oder Nebel der Ausschnitt noch größer gewählt wird. Damit ist sichergestellt, dass abhängig von der Wettersituation und damit dem erforderlichen unterschiedlichen Fahrverhalten des Fahrers angepaßt, die jeweils relevanten Ausschnitte der Daten dem Benutzer zur Verfügung gestellt werden, so dass dieser das Fahrzeug möglichst sicher führen kann. Als besonders geeigneter Sensor zur Erfassung des Wetterzustandes wird ein Temperatursensor vorgesehen, der im Fahrzeug integriert ist und dessen Sensorsignal durch verschiedene andere Systeme des Fahrzeugs mit verwendet werden kann.

Darüber hinaus hat es sich bewährt, den Sensor zur Erfassung der Fahrzeugumgebung dahingehend auszubilden, dass er geeignet ist, die Tageszeit oder den Tag/Nacht-Zustand zu erfassen, was beispielsweise durch eine Uhr oder einen Außenlichtsensor realisiert sein kann. Dieser Sensor ist mit der Steuereinheit verbunden, die die Bildverarbeitungseinheit dahingehend steuert, dass temperatur- oder tag/nacht-zustandsabhängig der Ausschnitt der zugeführten Bilddaten kleiner oder größer gewählt wird. Insbesondere wird der Bildausschnitt bei hoher Temperatur bzw. bei Tageslicht klein gewählt, während er bei Dunkelheit/Nacht oder niedriger Temperatur entsprechend größer gewählt ist.

Es hat sich besonders bewährt, einen Sensor zur Erfassung der Umgebung vorzusehen, beispielsweise eine Kamera, die mit der Infrarot-Kamera identisch sein kann, welche zusammen mit einer Bildverarbeitungseinheit, die das erfaßte Bildsignal dahingehend klassifiziert bzw. kategorisiert, was für eine Verkehrssituation, das heißt Stadtsituation, insbesondere Kreuzung oder Nebenstraße, bzw. Landstraße oder Autobahn vorliegt. Anhand dieser Klassifizierung oder Kategorisierung wird dann der Ausschnitt der wieder zu gebenden Daten aus den der Bildverarbeitungseinheit zugeführten Daten verschieden groß gewählt und insbesondere bei Situationen auf der Landstraße, in den Nebenstraßen, in den rechten Bereich der zugeführten Bilddaten verschoben, da insbesondere in diesen Verkehrssituationen ein besonderes Augenmerk auf Fahrradfahrer, Fußgänger und ähnliches zu richten ist. Hingegen ist bei einer Autobahnsituation eine Ausrichtung des Ausschnitten im Mittenbereich der zugeführten Bilddaten bevorzugt gewählt. Durch diese situationsabhängige Anpassung der Wahl des Ausschnittes und damit auch der Vergrößerung ist sichergestellt, dass der Benutzer die für ihn notwendigen Informationen ohne eine Vielzahl von wenig relevanten oder nicht relevanten Informationen angeboten bekommt. Hierdurch ist sichergestellt, dass die begrenzte Aufmerksamkeit des Benutzers voll und ganz auf die wichtigen Informationen gerichtet ist und dadurch ein sicheres Fahrverhalten ermöglicht ist.

Neben der Kamera mit zugeordneter Bildverarbeitungseinheit hat es sich bewährt, die Klassifikation bzw. Kategorisierung mit Hilfe eines Navigationsgerätes vorzunehmen.

Vorzugsweise wird das Nachtsichtgerät mit einer Eingabeinheit zur Eingabe eines oder mehreren Selektionskriterien, beispielsweise Vergrößerungsfaktor und/oder Größe des Bildausschnittes und/oder der Lage des Bildausschnittes durch den Benutzer versehen. Hierdurch kann der Benutzer diese Selektionskriterien der Bildverarbeitungseinheit über die Steuereinheit zuführen und die Wiedergabe des automobilen Infrarot-Nachtsichtgerätes nach seinen Bedürfnissen oder Wünschen steuern. Insbesondere ist es möglich, dass der Benutzer verschiedene Selektionskriterien einzeln oder gemeinsam in Kombination miteinander auswählt, beispielsweise das Maß der Abhängigkeit der Selektion von der Fahrzeuggeschwindigkeit, von der Temperatur, der Tageszeit, dem Wetterzustand oder dem Straßenverlauf.

Darüber hinaus ist es auch möglich, dass das Nachtsichtgerät ein Erkennungssystem für die Blickrichtung des Benutzers aufweist. Mittels dessen kann der Benutzer eine Verschiebung des Ausschnittes in den der Bildverarbeitungseinheit zugeführten Infrarot-Bilddaten bewirken. Durch ein Bestätigungssignal wird diese Selektion festgelegt und bis zur erneuten Festlegung beibehalten. Diese Bestätigung kann beispielsweise durch Blinzeln - erkannt durch das Erkennungssystem selbst - oder durch Betätigen eines Tasters oder durch Spracheingabe erfolgen. Dabei wird eine an sich bekannte Vorrichtung zur Blickrichtungserkennung verwendet. Beispiele hierfür sind aus der Patentliteratur und Fachzeitschriften bekannt. Hierzu wird bevorzugt eine Kamerasystem, das den Bereich des Fahrers oder Beifahrers erfaßt, verwendet, wobei dessen Bilddaten im sichtbaren Lichtbereich dahingehend ausgewertet werden, dass die Blickrichtung erkannt wird. Beispielsweise wird erkannt, ob der Blick nach rechts gerichtet ist, so dass mittels der Steuereinheit die Selektion der Infrarot-Bilddaten nach rechts verschoben wird, während bei einer Blickrichtung nach links ein nach links Verschieben des selektierten Bildausschnitts aus den der Bildeinheit zugeführten Infrarot-Bilddaten gegeben ist. Mithin wird der durch den Benutzer zielgerichtet beobachtete Bereich der Umgebung entsprechend durch das automobile Infrarot-Nachtsichtgerät selektiert und zur Wiedergabe gebracht. Dies ermöglicht eine sehr aussagekräftige und hilfreiche Information des Benutzers.

Durch die Integration des erfindungsgemäßen automobilen Infrarot-Nachtsichtgerätes in ein Fahrzeug, insbesondere unter der Nutzung der im Fahrzeug vorgesehenen Sensoren, welche parallel durch andere in im Fahrzeug realisierten Systemen verwendet werden, beispielsweise Geschwindigkeitsmesser, Hell/Dunkel-Sensor, Zeitgeber wird ein Fahrzeug geschaffen, das dem Benutzer eine sehr sichere Handhabung des Fahrzeugs auch unter schwierigen Bedingungen, wie z.B. Dunkelheit, Nebel, Dämmerung oder ähnliches ermöglicht. Dies ist insbesondere dadurch erreicht, daß neben der gewöhnlichen Sicht auf die Umgebung des Fahrzeuges eine zweite Sicht, die IR-Sicht auf den relevanten Bereich der Umgebung im nicht sichtbaren nahen Infrarot-Frequenzbereich des Lichtes dem Fahrer durch die Darstellung auf einem Display in einem Sichtfeld, insbesondere in Form eines Head-Up-Displays, zur Verfügung gestellt wird.

Neben der Ausbildung eines Head-Up-Displays hat es sich auch bewährt, das Display in Form eines großen Matrix-Displays, das neben der Darstellung der Infrarot-Bilddaten auch weitere für das Fahrzeug relevante Daten wiedergibt, beispielsweise die Fahrzeuggeschwindigkeit, die Betriebstemperatur, die Außentemperatur usw.. Dieses Display übernimmt somit zusätzlich die Funktion des zentralen Fahrzeug-Informationscockpits und ersetzt dieses somit.

Bevorzugt wird dabei eine C-MOS-Infrarot-Kamera verwendet, die eine logarithmische Empfindlichkeit aufweist. Diese wird im oberen Bereich der Windschutzscheibe mit fester Ausrichtung nach vorne und mit einer Bildverarbeitungseinheit in unmittelbarer Nähe zu ihr, vorzugsweise am Dachhimmel des Fahrzeuges, befestigt angeordnet. Diese sind mit der Displayeinheit, welche von der IR-Kamera und der Bildverarbeitungseinheit abgesetzt ist, verbunden. Die Displayeinheit wird in dem Fahrzeug im Bereich des Cockpits so angeordnet, dass die dargestellten Bilddaten im Sichtbereich des Benutzers liegen. Die Steuereinheit, die eine Eingabeeinheit für den Benutzer beinhaltet, ist vorzugsweise in der Bedienkonsole des Fahrzeugs untergebracht. Durch diese Anordnung der Komponenten des automobilen Infrarot-Nachtsichtgerätes im Fahrzeug ist eine einfach zu bedienende und eine die Aufmerksamkeit des Benutzers wenig ablenkende und damit eine Sicherheit schaffende Anordnung gegeben.

## Patentansprüche (Patentansprüche für folgende(n) Vertragsstaat(en): DE, FR, GB)

1. Automobiles IR-Nachtsichtgerät
mit einer IR-Kamera zur Aufnahme von Bilddaten, welche die Umgebung eines Automobils repräsentieren,
mit einem Display zur Darstellung von ihm zugeführten Bilddaten,
mit einer Bildverarbeitungseinheit, welche mit der IR-Kamera verbunden ist und die geeignet ist, die von dieser zugeführten Bilddaten zu verarbeiten,
und mit einer Steuereinheit zur Steuerung des IR-Nachtsichtgerätes,
**dadurch gekennzeichnet,**
**dass** im Rahmen der Verarbeitung einen zusammenhängenden Bildausschnitt repräsentierende Bilddaten anhand eines Selektionskriteriums aus den zugeführten Bilddaten ausgewählt werden
und wobei der ausgewählte Bildausschnitt zur Darstellung an das Display weitergegeben wird,
**dass** das Selektionskriterium auf Grundlage der Daten eines Sensors zur Erfassung der Fahrzeugumgebung parameterisiert wird.

2. Automobiles IR-Nachtsichtgerät nach Anspruch 1, **dadurch gekennzeichnet, dass** der Sensor zur Erfassung der Fahrzeugumgebung geeignet ist, den Straßenverlauf zu erfassen, und die Steuereinheit in Abhängigkeit des erfassten Straßenverlaufs das Selektionskriterium parameterisiert.

3. Automobiles IR-Nachtsichtgerät nach Anspruch 1 oder 2, **dadurch gekennzeichnet, dass** der Sensor zur Erfassung der Fahrzeugumgebung geeignet ist, den Wetterzustand zu erfassen, und die Steuereinheit in Abhängigkeit des erfassten Wetterzustands das Selektionskriterium parametrisiert.

4. Automobiles IR-Nachtsichtgerät nach einem der Ansprüche 1 bis 3, **dadurch gekennzeichnet, dass** der Sensor zur Erfassung der Fahrzeugumgebung geeignet ist, die Tageszeit oder den Tag-/ Nachtzustand zu erfassen, und die Steuereinheit in Abhängigkeit der erfassten Tageszeit oder des Tag-/Nachtzustands das Selektionskriterium parametrisiert.

5. Automobiles IR-Nachtsichtgerät nach einem der Ansprüche 1 bis 4, **dadurch gekennzeichnet, dass** der Sensor zur Erfassung der Fahrzeugumgebung geeignet ist, die erfasste Umgebung nach Verkehrssituationen zu kategorisieren, insbesondere in Stadt, Landstraße, Autobahn, und die Steuereinheit in Abhängigkeit der erfassten, kategorisierten Verkehrssituation das Selektionskriterium parametrisiert.

6. Automobiles IR-Nachtsichtgerät nach einem der vorstehenden Ansprüche, **dadurch gekennzeichnet, dass** als zusätzlich zur Auswahl eines zusammenhängenden Bildausschnittes aus den zugeführten Bilddaten, das Selektionskriterium auf Grundlage der Daten eines Sensors zur Erfassung der Fahrzeuggeschwindigkeit parametrisiert wird.

7. Automobiles IR-Nachtsichtgerät nach einem der vorstehenden Ansprüche, **dadurch gekennzeichnet, dass** die Steuereinheit mit einer Eingabeeinheit zur Eingabe eines oder mehrerer Selektionskriterien durch den Benutzer verbunden ist.

8. Automobiles IR-Nachtsichtgerät nach Anspruch 7, **dadurch gekennzeichnet, dass** die Eingabeeinheit einen Sensor zur Erfassung der Blickrichtung des Benutzers aufweist und dass die erfasste Blickrichtung zur Festlegung der Selektion verwendet wird.

9. Automobiles IR-Nachtsichtgerät nach einem der vorstehenden Ansprüche, **dadurch gekennzeichnet, dass** es eine IR-Lichtquelle zur Beleuchtung der Umgebung mit nahem IR-Licht aufweist.

10. Automobiles IR-Nachtsichtgerät nach einem der vorstehenden Ansprüche, **dadurch gekennzeichnet, dass** das IR-Nachtsichtgerät eine Bildverarbeitungseinheit umfasst, welche eine Verarbeitung der Bilddaten in Echtzeit ermöglicht.

11. Fahrzeug mit einem automobilen IR-Nachtsichtgerät nach einem der vorstehenden Ansprüche.

## Patentansprüche (Patentansprüche für folgende(n) Vertragsstaat(en): AT, BE, BG, CH, CY, CZ, DK, EE, ES, FI, GR, HU, IE, IT, LI, LU, MC, NL, PT, SE, SI, SK, TR)

1. Automobiles IR-Nachtsichtgerät
mit einer IR-Kamera zur Aufnahme von Bilddaten, welche die Umgebung eines Automobils repräsentieren,
mit einem Display zur Darstellung von ihm zugeführten Bilddaten,
mit einer Bildverarbeitungseinheit, welche mit der IR-Kamera verbunden ist und die geeignet ist, die von dieser zugeführten Bilddaten zu verarbeiten,
und mit einer Steuereinheit zur Steuerung des IR-Nachtsichtgerätes,
**dadurch gekennzeichnet,**
**dass** im Rahmen der Verarbeitung einen zusammenhängenden Bildausschnitt repräsentierende Bilddaten anhand eines Selektionskriteriums aus den zugeführten Bilddaten ausgewählt werden
und wobei der ausgewählte Bildausschnitt zur Darstellung an das Display weitergegeben wird,
**dass** das Selektionskriterium auf Grundlage der Daten eines Sensors zur Erfassung der Fahrzeuggeschwindigkeit parameterisiert wird.

2. Automobiles IR-Nachtsichtgerät
mit einer IR-Kamera zur Aufnahme von Bilddaten, welche die Umgebung eines Automobils repräsentieren,
mit einem Display zur Darstellung von ihm zugeführten Bilddaten,
mit einer Bildverarbeitungseinheit, welche mit der IR-Kamera verbunden ist und die geeignet ist, die von dieser zugeführten Bilddaten zu verarbeiten,
und mit einer Steuereinheit zur Steuerung des IR-Nachtsichtgerätes,
**dadurch gekennzeichnet,**
**dass** im Rahmen der Verarbeitung einen zusammenhängenden Bildausschnitt repräsentierende Bilddaten anhand eines Selektions-kriteriums aus den zugeführten Bilddaten ausgewählt werden und wobei der ausgewählte Bildausschnitt zur Darstellung an das Display weitergegeben wird,
**dass** das Selektionskriterium auf Grundlage der Daten eines Sensors zur Erfassung der Fahrzeugumgebung parametrisiert wird.

3. Automobiles IR-Nachtsichtgerät nach Anspruch 2, **dadurch gekennzeichnet, dass** der Sensor zur Erfassung der Fahrzeugumgebung geeignet ist, den Straßenverlauf zu erfassen, und die Steuereinheit in Abhängigkeit des erfassten Straßenverlaufs das Selektionskriterium parametrisiert.

4. Automobiles IR-Nachtsichtgerät nach Anspruch 2 oder 3, **dadurch gekennzeichnet, dass** der Sensor zur Erfassung der Fahrzeugumgebung geeignet ist, den Wetterzustand zu erfassen,
und die Steuereinheit in Abhängigkeit des erfassten Wetterzustands das Selektionskriterium parametrisiert.

5. Automobiles IR-Nachtsichtgerät nach einem der Ansprüche 2 bis 4, **dadurch gekennzeichnet, dass** der Sensor zur Erfassung der Fahrzeugumgebung geeignet ist, die Tageszeit oder den Tag-/ Nachtzustand zu erfassen, und die Steuereinheit in Abhängigkeit der erfassten Tageszeit oder des Tag-/Nachtzustands das Selektionskriterium parametrisiert.

6. Automobiles IR-Nachtsichtgerät nach einem der Ansprüche 2 bis 5, **dadurch gekennzeichnet, dass** der Sensor zur Erfassung der Fahrzeugumgebung geeignet ist, die erfasste Umgebung nach Verkehrssituationen zu kategorisieren, insbesondere in Stadt, Landstraße, Autobahn, und die Steuereinheit in Abhängigkeit der erfassten, kategorisierten Verkehrssituation das Selektionskriterium parameterisiert.

7. Automobiles IR-Nachtsichtgerät nach einem der vorstehenden Ansprüche, **dadurch gekennzeichnet, dass** die Steuereinheit mit einer Eingabeeinheit zur Eingabe eines oder mehrerer Selektionskriterien durch den Benutzer verbunden ist.

8. Automobiles IR-Nachtsichtgerät nach Anspruch 7, **dadurch gekennzeichnet, dass** die Eingabeeinheit einen Sensor zur Erfassung der Blickrichtung des Benutzers aufweist und dass die erfasste Blickrichtung zur Festlegung der Selektion verwendet wird.

9. Automobiles IR-Nachtsichtgerät nach einem der vorstehenden Ansprüche, **dadurch gekennzeichnet, dass** es eine IR-Lichtquelle zur Beleuchtung der Umgebung mit nahem IR-Licht aufweist.

10. Automobiles IR-Nachtsichtgerät nach einem der vorstehenden Ansprüche, **dadurch gekennzeichnet, dass** das IR-Nachtsichtgerät eine Bildverarbeitungseinheit umfasst, welche eine Verarbeitung der Bilddaten in Echtzeit ermöglicht.

11. Fahrzeug mit einem automobilen IR-Nachtsichtgerät nach einem der vorstehenden Ansprüche.

## Claims (Claims for the following Contracting State(s): DE, FR, GB)

1. Automobile IR night vision device,
having an IR camera for recording image data that represent the surroundings of an automobile,
having a display for displaying image data fed to it,
having an image processing unit that is connected to the IR camera and is suitable for processing the image data fed from the latter,
and having a control unit for controlling the IR night vision device,
**characterized in that** image data representing a coherent image section are selected with the aid of a selection criterion in the course of processing from the image data fed, and the selected image section are passed on for displaying to the display,
and **in that** the selection criterion is parameterized on the basis of the data of a sensor for detecting the vehicle surroundings.

2. Automobile IR night vision device according to Claim 1, **characterized in that** the sensor for detecting the vehicle surroundings is suitable for detecting the line of the road, and the control unit parameterizes the selection criterion as a function of the detected line of the road.

3. Automobile IR night vision device according to Claim 1 or 2, **characterized in that** the sensor for detecting the vehicle surroundings is suitable for detecting the weather situation, and the control unit parameterizes the selection criterion as a function of the detected weather situation.

4. Automobile IR vision device according to one of the Claims 1 to 3, **characterized in that** the sensor for detecting the vehicle surroundings is suitable for detecting the time of day or the day/night situation, and the control unit parameterizes the selection criterion as a function of the detected time of day or the day/night situation.

5. Automobile IR night vision device according to one of Claims 1 to 4, **characterized in that** the sensor for detecting the vehicle surroundings is suitable for categorizing the detected surroundings in terms of traffic situations, in particular in town, on a country road, on a motorway, and the control unit parameterizes the selection criterion as a function of the detected, categorized traffic situation.

6. Automatic IR night vision device according to one of the preceding claims, **characterized in that** in addition to the selection of a coherent image section from the image data fed, the selection criterion is parameterized on the basis of the data of a sensor for detecting the vehicle speed.

7. Automobile IR night vision device according to one of the preceding claims, **characterized in that** the control unit is connected to an input unit for inputting one or more connection criteria by the user.

8. The automobile IR night vision device according to Claim 7, **characterized in that** the input unit has a sensor for detecting the line of sight of the user, and **in that** the detected line of sight is used to establish the selection.

9. Automobile IR night vision device according to one of the preceding claims, **characterized in that** it has an IR light source for eliminating the surroundings with the aid of near IR light.

10. Automobile IR night vision device according to one of the preceding claims, **characterized in that** the IR night vision device comprises an image processing unit which permits processing of the image data in real time.

11. Vehicle having an automobile IR night vision device according to one of the preceding claims.

## Claims (Claims for the following Contracting State(s): AT, BE, BG, CH, CY, CZ, DK, EE, ES, FI, GR, HU, IE, IT, LI, LU, MC, NL, PT, SE, SI, SK, TR)

1. Automobile IR night vision device,
Having an IR camera for recording image data that represent the speed of an automobile,
having a display for displaying image data fed to it,
having an image processing unit that is connected to the IR camera and is suitable for processing the image data fed from the latter,
and having a control unit for controlling the IR night vision device,
**characterized in that** image data representing a coherent image section are selected with the aid of a selection criterion in the course of processing from the image data fed, and the selected image section is passed on for displaying to the display,
and **in that** the selection criterion is parameterized on the basis of the data of a sensor of detecting the vehicle speed.

2. Automobile IR night vision device,
having an IR camera for recording image data that represent the surroundings of an automobile,
having a display for displaying image data fed to it,
having an image processing unit that is connected to the IR camera and is suitable for processing the image data fed from the latter,
and having a control unit for controlling the IR night vision device,
**characterized in that** image data representing a coherent image section are selected with the aid of a selection criterion in the course of processing from the image data fed, and the selected image section is passed on for displaying to the display,
and **in that** the selection criterion is parameterized on the basis of the data of a sensor for detecting the vehicle surroundings.

3. Automobile IR night vision device according to Claim 2, **characterized in that** the sensor for detecting the vehicle surroundings is suitable for detecting the line of the road, and the control unit parameterizes the selection criterion as a function of the detected line of the road.

4. Automobile IR night vision device according to Claim 2 or 3, **characterized in that** the sensor for detecting the vehicle surroundings is suitable for detecting the weather situation, and the control unit parameterizes the selection criterion as a function of the detected weather situation.

5. Automobile IR vision device according to one of Claims 2 to 4, **characterized in that** the sensor for detecting the vehicle surroundings is suitable for detecting the time of day or the day/night situation, and the control unit parameterizes the selection criterion as a function of the detected time of day or the day/night situation.

6. Automobile IR night vision device according to one of Claims 2 to 5, **characterized in that** the sensor for detecting the vehicle surroundings is suitable for categorizing the detected surroundings in terms of traffic situations, in particular in town, on a country road, on a motorway, and the control unit parameterizes the selection criterion as a function of the detected, categorized traffic situation.

7. Automobile IR night vision device according to one of the preceding claims, **characterized in that** the control unit is connected to an input unit for inputting one or more connection criteria by the user.

8. Automobile IR night vision device according to Claim 7, **characterized in that** the input unit has a sensor for detecting the line of sight of the user, and **in that** the detected line of sight is used to establish the selection.

9. Automobile IR night vision device according to one of the preceding claims, **characterized in that** it has an IR light source for eliminating the surroundings with the aid of near IR light.

10. Automobile IR night vision device according to one of the preceding claims, **characterized in that** the IR night vision device comprises an image processing unit which permits processing of the image data in real time.

11. Vehicle having an automobile IR night vision device according to one of the preceding claims.

## Revendications (Revendications pour l'(les) Etat(s) contractant(s) suivant(s): DE, FR, GB)

1. Appareil de vision nocturne à infrarouge pour automobile, qui présente
une caméra infrarouge pour la saisie de données d'image qui représentent l'environnement d'une automobile,
avec un écran qui présente les données d'image qui lui sont apportées,
une unité de traitement d'image qui est reliée à la caméra infrarouge et qui permet de traiter les données d'image apportées par celle-ci et
une unité de commande qui commande l'appareil de vision nocturne à infrarouge,
**caractérisé en ce que**
dans le cadre du traitement, des données d'image qui représentent une partie continue de l'image sont sélectionnées à l'aide d'un critère de sélection dans les données d'image apportées, la partie sélectionnée de l'image étant transmise à l'écran pour être présentée, et **en ce que** le critère de sélection est paramétré sur base des données d'un détecteur de saisie de l'environnement du véhicule.

2. Appareil de vision nocturne à infrarouge pour automobile selon la revendication 1, **caractérisé en ce que** le détecteur de saisie de l'environnement du véhicule permet de saisir le tracé de la chaussée, l'unité de commande paramétrant le critère de sélection en fonction du tracé de la chaussée qui a été saisi.

3. Appareil de vision nocturne à infrarouge pour automobile selon les revendications 1 ou 2, **caractérisé en ce que** le détecteur de saisie de l'environnement du véhicule permet de détecter les conditions météorologiques, l'unité de commande paramétrant le critère de sélection en fonction des conditions météorologiques détectées.

4. Appareil de vision nocturne à infrarouge pour automobile selon l'une quelconque des revendications 1 à 3, **caractérisé en ce que** le détecteur de saisie de l'environnement du véhicule permet de détecter l'heure du jour ou les conditions de jour/nuit, l'unité de commande paramétrant le critère de sélection en fonction de l'heure du jour ou des conditions de jour/nuit détectées.

5. Appareil de vision nocturne à infrarouge pour automobile selon l'une quelconque des revendications 1 à 4, **caractérisé en ce que** le détecteur de saisie de l'environnement du véhicule permet de catégoriser l'environnement saisi en fonction des situations de roulage, en particulier en ville, sur route, sur autoroute, l'unité de commande paramétrant le critère de sélection en fonction de la situation de roulage détectée et catégorisée.

6. Appareil de vision nocturne à infrarouge pour automobile selon l'une quelconque des revendications précédentes, **caractérisé en ce qu'**en plus de sélectionner une partie continue d'image dans les données d'image apportées, il paramètre le critère de sélection sur base des données d'un détecteur de saisie de la vitesse du véhicule.

7. Appareil de vision nocturne à infrarouge pour automobile selon l'une quelconque des revendications précédentes, **caractérisé en ce que** l'unité de commande est reliée à une unité d'introduction qui permet à l'utilisateur d'introduire un ou plusieurs critères de sélection.

8. Appareil de vision nocturne à infrarouge pour automobile selon la revendication 7, **caractérisé en ce que** l'unité d'introduction présente un détecteur de saisie de la direction d'observation de l'utilisateur et **en ce que** la direction d'observation détectée est utilisée pour définir la sélection.

9. Appareil de vision nocturne à infrarouge pour automobile selon l'une quelconque des revendications précédentes, **caractérisé en ce qu'**il présente une source de lumière infrarouge qui éclaire l'environnement par de la lumière dans l'infrarouge proche.

10. Appareil de vision nocturne à infrarouge pour automobile selon l'une quelconque des revendications précédentes, **caractérisé en ce que** l'appareil de vision nocturne à infrarouge comporte une unité de traitement d'image qui permet le traitement des données d'image en temps réel.

11. Véhicule doté d'un appareil de vision nocturne à infrarouge pour automobile selon l'une quelconque des revendications précédentes.

## Revendications (Revendications pour l'(les) Etat(s) contractant(s) suivant(s): AT, BE, BG, CH, CY, CZ, DK, EE, ES, FI, GR, HU, IE, IT, LI, LU, MC, NL, PT, SE, SI, SK, TR)

1. Appareil de vision nocturne à infrarouge pour automobile, qui présente
une caméra infrarouge pour la saisie de données d'image qui représentent l'environnement d'une automobile,
avec un écran qui présente les données d'image qui lui sont apportées,
une unité de traitement d'image qui est reliée à la caméra infrarouge et qui permet de traiter les données d'image apportées par celle-ci et
une unité de commande qui commande l'appareil de vision nocturne à infrarouge,
**caractérisé en ce que**
dans le cadre du traitement, des données d'image qui représentent une partie continue de l'image sont sélectionnées à l'aide d'un critère de sélection dans les données d'image apportées, la partie sélectionnée de l'image étant transmise à l'écran pour être présentée, et **en ce que** le critère de sélection est paramétré sur base des données d'un détecteur de saisie de la vitesse du véhicule.

2. Appareil de vision nocturne à infrarouge pour automobile, qui présente
une caméra infrarouge pour la saisie de données d'image qui représentent l'environnement d'une automobile,
avec un écran qui présente les données d'image qui lui sont apportées,
une unité de traitement d'image qui est reliée à la caméra infrarouge et qui permet de traiter les données d'image apportées par celle-ci et
une unité de commande qui commande l'appareil de vision nocturne à infrarouge,
**caractérisé en ce que**
dans le cadre du traitement, des données d'image qui représentent une partie continue de l'image sont sélectionnées à l'aide d'un critère de sélection dans les données d'image apportées, la partie sélectionnée de l'image étant transmise à l'écran pour être présentée, et **en ce que** le critère de sélection est paramétré sur base des données d'un détecteur de saisie de l'environnement du véhicule.

3. Appareil de vision nocturne à infrarouge pour automobile selon la revendication 2, **caractérisé en ce que** le détecteur de saisie de l'environnement du véhicule permet de saisir le tracé de la chaussée, l'unité de commande paramétrant le critère de sélection en fonction du tracé de la chaussée qui a été saisi.

4. Appareil de vision nocturne à infrarouge pour automobile selon la revendication 2 ou 3, **caractérisé en ce que** le détecteur de saisie de l'environnement du véhicule permet de détecter les conditions météorologiques, l'unité de commande paramétrant le critère de sélection en fonction des conditions météorologiques détectées.

5. Appareil de vision nocturne à infrarouge pour automobile selon l'une quelconque des revendications 2 à 4, **caractérisé en ce que** le détecteur de saisie de l'environnement du véhicule permet de détecter l'heure du jour ou les conditions de jour/nuit, l'unité de commande paramétrant le critère de sélection en fonction de l'heure du jour ou des conditions de jour/nuit détectées.

6. Appareil de vision nocturne à infrarouge pour automobile selon l'une quelconque des revendications 2 à 5, **caractérisé en ce que** le détecteur de saisie de l'environnement du véhicule permet de catégoriser l'environnement saisi en fonction des situations de roulage, en particulier en ville, sur route, sur autoroute, l'unité de commande paramétrant le critère de sélection en fonction de la situation de roulage détectée et catégorisée.

7. Appareil de vision nocturne à infrarouge pour automobile selon l'une quelconque des revendications précédentes, **caractérisé en ce que** l'unité de commande est reliée à une unité d'introduction qui permet à l'utilisateur d'introduire un ou plusieurs critères de sélection.

8. Appareil de vision nocturne à infrarouge pour automobile selon la revendication 7, **caractérisé en ce que** l'unité d'introduction présente un détecteur de saisie de la direction d'observation de l'utilisateur et **en ce que** la direction d'observation détectée est utilisée pour définir la sélection.

9. Appareil de vision nocturne à infrarouge pour automobile selon l'une quelconque des revendications précédentes, **caractérisé en ce qu'**il présente une source de lumière infrarouge qui éclaire l'environnement par de la lumière dans l'infrarouge proche.

10. Appareil de vision nocturne à infrarouge pour automobile selon l'une quelconque des revendications précédentes, **caractérisé en ce que** l'appareil de vision nocturne à infrarouge comporte une unité de traitement d'image qui permet le traitement des données d'image en temps réel.

11. Véhicule doté d'un appareil de vision nocturne à infrarouge pour automobile selon l'une quelconque des revendications précédentes.
